# EUROPÄISCHE PATENTANMELDUNG

(11) **EP 2 421 107 A2**
(43) Veröffentlichungstag der Anmeldung: **22.02.2012**
(21) Anmeldenummer: 11006423.5
(22) Anmeldetag: 04.08.2011
(51) Int. Cl.: H02G 3/16

(54) **Anschlussdose mit Halteeinrichtung für Steckverbinder**

(30) Priorität: 17.08.2010 DE 102010034634
(71) Anmelder: Lumberg Connect GmbH, 58579 Schalksmühle (DE)
(72) Erfinder: Richter, Michael, 58579 Schalksmühle (DE); Gazke, Dennis, 58507 Lüdenscheid (DE)
(74) Vertreter: Ostriga, Sonnet, Wirths & Roche

(57) **Zusammenfassung**

Die Erfindung betrifft eine Anschlussdose, insbesondere für Solarmodule, mit einer zur modulseitigen Montagefläche parallelen Basis und mit einem von einem Deckel verschlossenen und von einem Gehäuse gebildeten Innenraum, innerhalb dessen ein solarmodulseitiger Leiter mit einer Anschlussleitung zum Abführen erzeugter Elektrizität verbunden ist, wobei der den Innenraum verlassene Leiter mit einem Steckverbinder versehen ist, der ein einen Anschlusskontakt tragendes Steckorgan und ein die Steckverbindung aufrecht haltendes Sicherungsorgan aufweist, wobei der Steckverbinder in einer anschlussdosenseitigen Halteeinrichtung angeordnet ist, wonach die Halteeinrichtung eine zum Steckorgan komplementäre Steckmimik aufweist, an welcher der Steckverbinder vermittels seines Steckorgans angeordnet ist.

## Beschreibung

Die Erfindung betrifft eine Anschlussdose, insbesondere für Solarmodule, mit einer zur modulseitigen Montagefläche parallelen Basis und mit einem von einem Deckel verschlossenen und von einem Gehäuse gebildeten Innenraum, innerhalb dessen ein solarmodulseitiger Leiter mit einer Anschlussleitung zum Abführen erzeugter Elektrizität verbunden ist, wobei der den Innenraum verlassene Leiter mit einem Steckverbinder versehen ist, der ein einen Anschlusskontakt tragendes Steckorgan und ein die Steckverbindung aufrecht haltendes Sicherungsorgan aufweist, wobei der Steckverbinder in einer anschlussdosenseitigen Halteeinrichtung angeordnet ist.

Gattungsgemäße Anschlussdosen sind beispielsweise aus DE 10 2007 023 210 B3, DE 10 2007 027 861 A1 und DE 10 2007 060 023 A1 bekannt.

Das Erfordernis, die Steckverbinder der Anschlussleitungen über eine Halteeinrichtung am Gehäuse zu halten, hat sich im Wesentlichen aus den Anforderungen einer automatisierten Solarmodulherstellung ergeben. Für die vollautomatisierte Herstellung von Solarmodulen müssen die auf den Solarmodulen zu montierenden Anschlussdosen maschinengerecht in Vorratsstapeln oder Vorratsmagazinen vorgehalten werden, damit ein entsprechender Montageroboter auf die Anschlussdosen zugreifen kann. Insofern wird die Anschlussdose in der Regel beim Anschlussdosenhersteller vormontiert und mit entsprechenden Anschlussleitungen versehen. Um entsprechend geordnete Stapel anliefen zu können, sind die Anschlussdosenleitungen häufig über die Steckverbinder direkt an der Dose gesichert.

Die Sicherung der Anschlussleitungen mittels der Steckverbinder an der Anschlussdose hat einen weiteren wesentlichen Vorteil. Der Transport fertig gestellter Solarmodule wird durch die geordnet befestigten Anschlussleitungen wesentlich vereinfacht. Beim Aufstellen der Solarmodule am Einsatzort können diese mittels der Steckverbinder und eventueller Zwischenstücke einfach und schnell miteinander verbunden werden.

Schließlich sind die an der Anschlussdose fixierten Steckverbinder während der Produktion des Solarmoduls relativ lagestabil, so dass man dazu übergegangen ist, mit einer Prüfeinrichtung die Anschlusskontakte der Steckverbinder anzufahren und die Funktionsfähigkeit der Anschlussdose während der Montage auf dem Solarmodul zu prüfen.

Es hat sich jedoch herausgestellt, dass die Halteeinrichtungen zur Anordnung der Steckverbinder an der Anschlussdose aus dem Stand der Technik verbesserungswürdig sind. So besteht zum Einen das Problem, dass die Lage der Anschlusskontakte aufgrund von Materialtoleranzen und des Passungsspiels der Halteeinrichtungen, aber auch möglicher transportbedingter Verschiebungen der Steckverbinder in der Halteeinrichtung einer gewissen Streuung unterliegen, was die automatisierte Funktionsprüfung erschwert.

Bei komplexer aufgebauten Halteeinrichtungen, welche aufgrund bestimmter Formgebung von Halteeinrichtung und Steckverbinder eine relativ exakte Positionierung desselben erlauben, haben in der Handhabung Nachteile. Hier ist das Einsetzen des Steckverbinders in die Halteeinrichtung mit einem gewissen Aufwand verbunden.

Insofern ist es Aufgabe der Erfindung, eine neuartige Halteeinrichtung einer Anschlussdose für Steckverbinder zu schaffen, welche eine sichere Anordnung desselben bei einfacher Handhabung gewährleistet.

Gelöst wird die Aufgabe von einer Anschlussdose mit den Merkmalen des Anspruchs 1, insbesondere mit den kennzeichnenden Merkmalen, wonach die Halteeinrichtung eine zum Steckorgan komplementäre Steckmimik aufweist, an welcher der Steckverbinder vermittels seines Steckorgans angeordnet ist.

Gemäß Erfindung ist die Halteeinrichtung als komplementärer Gegenpart zum anzuordnenden Steckverbinder ausgebildet. Insofern macht sich die Erfindung den Umstand zunutze, dass der Steckverbinder an sich aufgrund seiner originären Funktion über Halte- und Sicherungsmittel verfügt. Dies sind solche Halte- und Sicherungsmittel, welche der Verbindung seines Gegenparts dienen. Diese dem Steckverbinder aufgrund seiner originären Funktion eigenen Halte- und Sicherungsmittel nutzt die Anschlussdose gemäß der Erfindung zur Sicherung des Steckverbinders für Transport und Montage. Konkret bedeutet dies, dass ein buchsenartiger Steckverbinder auf eine Halteeinrichtung aufgesteckt wird, die in ihrer Ausbildung die Steckmimik eines komplementären Steckers aufweist. Für einen Steckverbinder in Form eines Steckers verfügt die entsprechende Halteeinrichtung über die Steckmimik einer komplementären Buchse.

Diese erfindungsgemäße Ausbildung der Anschlussdose und ihrer Halteeinrichtung gewährleistet eine einfache und sichere sowie lagestabile und lagedefinierte Anordnung der Steckverbinder.

In einer bevorzugten Ausführungsform ist vorgesehen, dass die Halteinrichtung ein zum Sicherungsorgan komplementäres Sicherungsmittel aufweist, mittels welchem der Steckverbinder über sein Sicherungsorgan mit der Halteeinrichtung gekoppelt ist.

In dieser außerordentlich bevorzugten Ausführungsform verfügt die Halteeinrichtung nicht nur über eine zum Steckverbinder komplementäre Steckmimik, sondern auch über eine entsprechend komplementäre Sicherungsmimik, so dass die Sicherungsorgane des Steckverbinders der unverlierbaren Halterung an der Halteeinrichtung dienen und nicht etwa separate Sicherungseinrichtungen am Steckverbinder vorgesehen sein müssen.

In einer konkreten Ausführungsform ist vorgesehen, dass das Steckorgan schaftartig ausgebildet und von einer sacklochartigen Steckmimik lediglich unter Einhaltung eines Passungsspiels aufgenommen ist.

Es ist weiterhin vorgesehen, dass das Sicherungsorgan als schaftparalleler Rasthaken ausgebildet ist, welcher in eine auf Seiten der Halteeinrichtung vorhandene Rastausnehmung eingreift.

Eine alternative Ausführungsform sieht vor, dass das Steckorgan als Bohrung ausgebildet ist, in welche eine schaftartige Steckmimik lediglich unter Einhaltung eines Passungsspiels eingreift.

Diese lässt sich weiterbilden, indem das Sicherungsorgan als Rastausnehmung ausgebildet ist, in welche eine rastlaschenartiges Sicherungsmittel auf Seiten der Halteeinrichtung eingreift.

Dabei ist weiterhin vorgesehen, dass das rastlaschenartige Sicherungsmittel von außen in eine steckverbinderseitige Rastausnehmung eingreift.

Von besonderem Vorteil ist, wenn die durch das steckverbinderseitige Sicherungsorgan und das Sicherungsmittel auf Seiten der Halteeinrichtung hergestellte Kopplung von Anschlussdose und Steckverbinder werkzeuglos lösbar ist.

Die Ausbildung in dieser Form hat den wesentlichen Vorteil, dass die Steckverbinder zwar für Transport und Montage sicher an der Anschlussdose gehalten sind, die Herstellung von Steckverbindungen mit Anschlussleitungen und das hierzu erforderliche Lösen der Steckverbinder von der Halteeinrichtung einfach und schnell erfolgen kann.

Hierzu ist insbesondere vorgesehen, dass das Sicherungsmittel derart ausgestaltet ist, dass sich der Steckverbinder von der Halteeinrichtung bei Überschreiten einer definierten Zugkraft und hinsichtlich der Sicherungsorgane beschädigungsfrei löst.

Im Folgenden wird die Erfindung anhand der Darstellung eines Ausführungsbeispiels näher erläutert. Es zeigen:
- Fig. 1: die Aufsicht auf eine erfindungsgemäße Anschlussdose,
- Fig. 2: die perspektivische Anschlussdose gemäß Fig. 1.

In den Figuren ist eine Anschlussdose insgesamt mit der Bezugsziffer 10 bezeichnet.

Die Anschlussdose 10 ist insbesondere zur Montage auf Solarmodulen vorgesehen und weist hierzu eine Basis 11 auf, die ihrer Unterseite entspricht. Diese Basis 11 ist parallel zur Montagefläche des Solarmoduls gerichtet und wird üblicherweise über eine Verklebung auf selbigem festgelegt.

Ein von einem im Spritzgussverfahren hergestellten Gehäuse 12 umschlossener Innenraum 13 gewährt den Zugang zu Gehäusekontakten 14. Diese werden durch Schweißen oder Löten mit solarmodulseitigen Leitern verbunden und sind selbst als Stanzteile ausbildet. Die Gehäusekontakte 14 stehen in elektrischer Verbindung mit im Gehäusematerial eingebetteten Funktionsteilen, insbesondere mit Bypassdioden. Diese wiederum sind mit die Anschlussdose 10 verlassenden Anschlussleitungen 15 konnektiert, die der Ableitung erzeugter Elektrizität dienen.

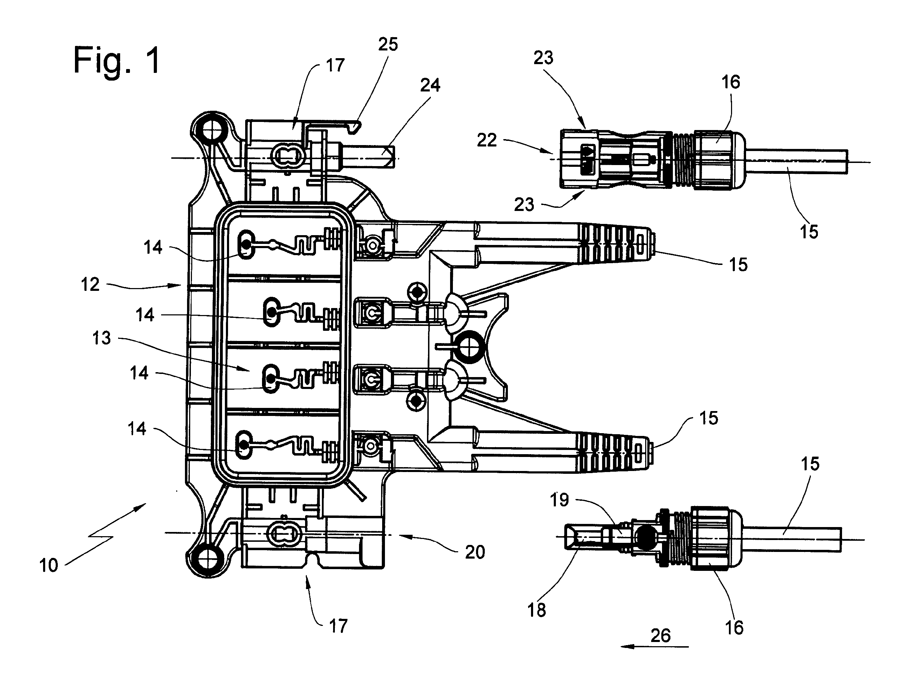

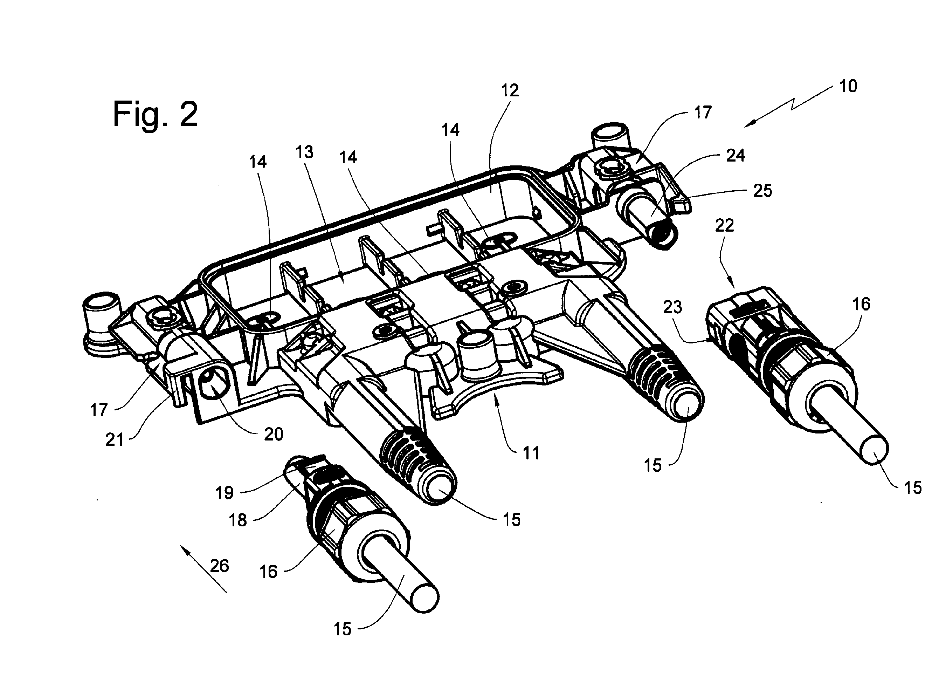

Die Anschlussleitungen 15 sind an ihrem Ende mit Steckverbindern 16 versehen. Die in den Figuren 1 und 2 dargestellte Unterbrechung zwischen den Anschlussleitungen 15, welche die Anschlussdose 10 verlassen, und den Anschlussleitungen 15, an deren Ende die Steckverbinder 16 angeordnet sind, ist ausschließlich darstellungsbedingt. Tatsächlich handelt es sich jeweils um einen durchgehenden Leitungsstrang.

Seitlich am Gehäuse und mit diesem einstückig ausgebildet sind Halteeinrichtungen 17 für die Steckverbinder 16 angeordnet. Diese weisen eine zum zugehörigen Steckverbinder 16 form- und steckkomplementäre Steckmimik auf. Die dargestellten Steckverbinder 16 lassen sich folglich einfach an die jeweilige Halteeinrichtung 17 anstecken.

Konkret weist der in den Darstellungen linke Steckverbinder 16 ein in etwa schaftartiges Steckorgan 18 auf. Zwei als Rasthaken 19 ausgebildete Sicherungsorgane erstrecken sich schaftparallel. Die zugehörige Halteeinrichtung 17 umfasst eine in etwa sacklochartige Steckmimik 20. Ein benachbart der sacklochartigen Steckmimik 20 angeordneter Steg 21 kooperiert mit den Rasthaken 19.

Zur Halterung des in den Darstellungen linken Steckverbinders 16 wird dieser mit seinem schaftartigen Steckorgan 18 in die sacklochartige Steckmimik 20 der Halteeinrichtung 17 eingesteckt, wobei der linke Rasthaken 19 am Steg 21 vorbei gleitet und diesen den Steckverbinder 16 sichernd hintergreift. Hierzu ist der dargestellte Steckverbinder 16 vor dem Aufstecken an die Halteeinrichtung 17 um 90° um seine Längsachse zu drehen.

Der in den Zeichnungen rechtsseitige Steckverbinder 16 umfasst ein Steckorgan, welches als Bohrung 22 ausgebildet ist. Die Sicherungsorgane dieses Steckverbinders 16 werden von zwei Rastausnehmungen 23 gebildet. Die zugehörige Halteeinrichtung 17 verfügt über eine schaftartige Steckmimik 24. Das Sicherungsmittel dieser Halteeinrichtung 17 besteht aus einer Rastlasche 25.

Zur Halterung des rechtsseitigen Steckverbinders 16 wird selbiger mit seiner Bohrung 22 auf die schaftartige Steckmimik 24 der Halteeinrichtung 17 aufgeschoben. Dabei greift die Rastlasche 25 von außen in eine Rastausnehmung 23 des Steckverbinders ein und sichert diesen an der Anschlussdose 10.

Ein mit der Bezugsziffer 26 versehener Pfeil symbolisiert die Steckrichtung der Steckverbinder 16 zur Anordnung der jeweils zugehörigen Halteeinrichtung 17.

Zusammenfassend wurde eine Anschlussdose 10 insbesondere für Solarmodule beschrieben, die über eine neuartige Halteeinrichtung 17 für Steckverbinder 16 verfügt. Das wesentlich Neue an dieser Halteeinrichtung 17 ist eine zum jeweiligen zu haltenden Steckverbinder 16 komplementäre Steckmimik. Hierdurch werden die auf Seiten des Steckverbinders 16 vorhandenen Steckorgane für die Halterung an der Anschlussdose 10 genutzt. In Erweiterung sind auf Seiten der Anschlussdose 10 Sicherungsmittel 21 und 25 vorgesehen, die mit den steckverbinderseitigen Sicherungsorganen 19 und 23 kooperieren, um den Steckverbinder 16 sicher an der Anschlussdose 10 zu halten.

### Bezugszeichenliste:

- 10: Anschlussdose
- 11: Basis
- 12: Gehäuse
- 13: Innenraum von 12
- 14: Gehäusekontakt
- 15: Anschlussleitung
- 16: Steckverbinder
- 17: Halteeinrichtung
- 18: schaftartiges Steckorgan
- 19: Rasthaken
- 20: sacklochartige Steckmimik
- 21: Steg
- 22: Bohrung
- 23: Rastausnehmung
- 24: schaftartige Steckmimik
- 25: Rastlasche
- 26: Pfeil

## Patentansprüche

1. Anschlussdose 6, insbesondere für Solarmodule, mit einer zur modulseitigen Montagefläche parallelen Basis 11 und mit einem von einem Deckel verschlossenen und von einem Gehäuse 12 gebildeten Innenraum 13, innerhalb dessen ein solarmodulseitiger Leiter mit einer Anschlussleitung 15 zum Abführen erzeugter Elektrizität verbunden ist, wobei der den Innenraum 13 verlassene Leiter mit einem Steckverbinder 16 versehen ist, der ein einen Anschlusskontakt tragendes Steckorgan 18, 22 und ein die Steckverbindung aufrecht haltendes Sicherungsorgan 19, 23 aufweist, wobei der Steckverbinder 16 in einer anschlussdosenseitigen Halteeinrichtung 17 angeordnet ist, **dadurch gekennzeichnet, dass** die Halteeinrichtung 17 eine zum Steckorgan 18, 22 komplementäre Steckmimik 20, 24 aufweist, an welcher der Steckverbinder 16 vermittels seines Steckorgans 18, 22 angeordnet ist.

2. Anschlussdose nach Anspruch 1, **dadurch gekennzeichnet, dass** die Halteinrichtung 17 ein zum Sicherungsorgan 19, 23 des Steckverbinders 16 komplementäres Sicherungsmttel 21, 25 aufweist, vermittels welchem der Steckverbinder 16 über sein Sicherungsorgan 19, 23 mit der Halteeinrichtung 17 gekoppelt ist.

3. Anschlussdose nach Anspruch 1, **dadurch gekennzeichnet, dass** das Steckorgan 18 schaftartig ausgebildet und von einer sacklochartigen Steckmimik 20 lediglich unter Einhaltung eines Passungsspiels aufgenommen ist.

4. Anschlussdose nach Anspruch 3, **dadurch gekennzeichnet, dass** das Sicherungsorgan als schaftparalleler Rasthaken 19 ausgebildet ist, welcher in eine auf Seiten der Halteeinrichtung 17 vorhandene Rastausnehmung eingreift.

5. Anschlussdose nach Anspruch 1, **dadurch gekennzeichnet, dass** das Steckorgan als Bohrung 22 ausgebildet ist, in welche eine schaftartige Steckmimik 24 lediglich unter Einhaltung eines Passungsspiels eingreift.

6. Anschlussdose nach Anspruch 5, **dadurch gekennzeichnet, dass** das Sicherungsorgan als Rastausnehmung ausgebildet ist, in welche ein rastlaschenartiges Sicherungsmittel 25 auf Seiten der Halteeinrichtung 17 eingreift.

7. Anschlussdose nach Anspruch 6, **dadurch gekennzeichnet, dass** das rastlaschenartige Sicherungsmittel 25 von außen in die steckverbinderseitige Rastausnehmung 23 eingreift.

8. Anschlussdose nach Anspruch 2 oder 3 oder 6, **dadurch gekennzeichnet, dass** die durch das steckverbinderseitige Sicherungsorgan 19, 23 und das Sicherungsmittel 21, 25 auf Seiten der Halteeinrichtung 17 hergestellte Kopplung von Anschlussdose 10 und Steckverbinder 16 werkzeuglos lösbar ist.

9. Anschlussdose nach Anspruch 8, **dadurch gekennzeichnet, dass** das Sicherungsmittel 21, 25 derart ausgestaltet ist, dass sich der Steckverbinder 16 von der Halteeinrichtung 17 bei Überschreiten einer definierten Zugkraft und hinsichtlich der Sicherungsorgane 19, 23 beschädigungsfrei löst.
